# EUROPEAN PATENT APPLICATION

(11) **EP 2 738 233 A1**
(43) Date of publication of application: **04.06.2014**
(21) Application number: 13194018.1
(22) Date of filing: 22.11.2013
(51) Int. Cl.: C09K 8/03, C09K 8/14, C09K 8/66

(54) **Methods of treating a subterranean formation with friction reducing clays**

(30) Priority: 28.11.2012 US 201213686972
(71) Applicant: HALLIBURTON ENERGY SERVICES, INC., Houston, TX 77072-5299 (US)
(72) Inventor: Tang, Tingji, Houston, TX Texas 77032 (US); Weaver, Jimmie D., Duncan, OK Oklahoma 73536 (US)
(74) Representative: HOFFMANN EITLE

(57) **Abstract**

The present invention provides a method of treating a subterranean formation comprising: providing a treatment fluid comprising an aqueous base fluid and a friction reducing clay selected from the group consisting of a phyllosilicate smectite group clay; a phyllosilicate serpentine group clay; a phyllosilicate pyrophyllite-talc group clay; a phyllosilicate mica group clay; a phyllosilicate chlorite group clay; and any combination thereof; and placing the treatment fluid into the subterranean formation.

## Description

### BACKGROUND

The present invention relates to methods of treating a subterranean formation with friction reducing clays.

Subterranean wells (e.g., hydrocarbon producing wells, water producing wells, and injection wells) are often stimulated by hydraulic fracturing treatments. In hydraulic stimulation treatments, a treatment fluid is pumped into a portion of a subterranean formation at a rate and pressure such that the subterranean formation breaks down and one or more fractures are formed. Typically, particulate solids, such as graded sand, are suspended in a portion of the treatment fluid and then deposited into the fractures. These particulate solids, or "proppants," serve to prop the fracture open (*e.g.*, keep the fracture from fully closing) after the hydraulic pressure is removed. By keeping the fracture from fully closing, the proppants aid in forming conductive paths through which produced fluids, such as hydrocarbons, may flow.

Well stimulation typically requires large amounts of treatment fluids to be pumped downhole under high pressures and high flow rates in short periods of time, causing turbulent flow of the treatment fluid. The turbulence results in friction pressure between the treatment fluid and the stimulation equipment (*e.g*., wellbore piping, wellbore casing, etc.) and between the treatment fluid and the subterranean formation. The friction pressure increases the energy necessary to pump the treatment fluid downhole and can cause damage to stimulation equipment and the formation. To combat the friction pressure, friction reducers are often added to treatment fluids. Traditional friction reducers are high molecular weight, long-chain polymers (*e.g*., polyacrylamide) that are able to change the rheological properties of the treatment fluid to overcome or minimize friction pressure. High molecular weight, long-chain friction reducing polymers are capable of converting turbulent flow to laminar flow, thereby reducing frictional drag and pressure loss. Traditional friction reducing polymers tend to be characterized by a large hydrodynamic radius such that upon shearing, the friction reducing polymers can absorb energy from high nucleation sites by stretching to a more relaxed form and redistribute the energy to other locales.

While traditional friction reducing polymers are effective at reducing friction pressure, their use may lead to stimulation equipment damage and/or formation damage. Friction reducing polymers commonly stretch into a flattened and more disperse configuration compared to their original shape while being introduced or after introduction into a formation under high flow rate and pressure. This flattened and disperse configuration is referred to as a "gummy bear" and is due to hydrolyzed friction reducing polymers associating with formation divalent ions (*e.g*., Ca ions or Mg ions). These gummy bears may interfere with the optimal functionality of stimulation equipment effectively reversing at least some of the friction reducing capacity of the polymers and/or may cause damage to stimulation equipment. Additionally, these gummy bears may intrude into the pores or openings within a formation resulting in damage to the formation or a reduction in formation conductivity. Traditional friction reducing polymers may undergo depolymerization under high shear such that the long-chain polymers are broken into short-chain polymers, resulting in sub-optimal friction reducing functionality thereby causing stress on stimulation equipment and an increase energy requirement to pump treatment fluids downhole. Short-chain polymers are not as efficient as absorbing and redistributing turbulent energy. Therefore, a friction reducer that is stable under high flow rates, pressure, and shear stresses would be of benefit to one of ordinary skill in the art.

### SUMMARY OF THE INVENTION

The present invention relates to methods of treating a subterranean formation with friction reducing clays.

In one embodiment, the present invention provides a method of treating a subterranean formation comprising: providing a treatment fluid comprising an aqueous base fluid and a friction reducing clay, wherein the friction reducing clay is a phyllosilicate clay selected from the group consisting of a phyllosilicate smectite group clay; a phyllosilicate serpentine group clay; a phyllosilicate pyrophyllite-talc group clay; a phyllosilicate mica group clay; a phyllosilicate chlorite group clay; and any combination thereof; and placing the treatment fluid into the subterranean formation.

In another embodiment, the present invention provides a method of treating a subterranean formation comprising: providing a treatment fluid comprising an aqueous base fluid, a friction reducing clay, and a friction reducing polymer, wherein the friction reducing clay is a phyllosilicate clay selected from the group consisting of a phyllosilicate smectite group clay; a phyllosilicate serpentine group clay; a phyllosilicate pyrophyllite-talc group clay; a phyllosilicate mica group clay; a phyllosilicate chlorite group clay; and any combination thereof; and placing the treatment fluid into the subterranean formation.

The features and advantages of the present invention will be readily apparent to those skilled in the art upon a reading of the description of the preferred embodiments that follows.

### DETAILED DESCRIPTION

The present invention relates to methods of treating a subterranean formation with friction reducing clays.

The friction reducing clays of the present invention are polyelectolytic and capable of, for example, electrostatic interaction (*e.g*., hydrogen bonding). The disruption of the electrostatic interaction of the friction reducing clay allows the clay to absorb turbulent energy and redistribute it. The polyelectrolytic friction reducing clays of the present invention may be of the phyllosilicate group. Phyllosilicates have traditionally been considered damaging to stimulation fracturing operations and well productivity as they may be produced as formation fines. Formation fines may cause particles suspended in the produced fluids to bridge pore throats in the near wellbore portion of a fracture, reducing well productivity. However, as disclosed in the teachings of the present invention, use of controlled phyllosilicates in treatment fluids used for stimulation operations may perform as friction reducers that allow pumping of treatment fluids at reduced energy expenditures and reduced damage to stimulation equipment and formations.

Phyllosilicates are characterized by silicate tetraedrons, in which a central silicon atom is surrounded by four oxygen atoms at the corners of the tetrahedron. The sheets are formed by the sharing of three of the oxygen atoms of each tetrahedron with other tetrahedons without any two tetrahedrons having more than one oxygen atom in common (*e.g*., each tetrahedron is linked to three other, distinct tetrahedrons). The remaining unshared oxygen atom is capable of interaction or bonding with other atoms or molecules. Phyllosilicates may form a sheet structure comprising nanodisks, spheres, or rod-like components.

The sheet structure of phyllosilicate clays not only reduces frictional drag, it also exhibits shear thinning properties such that when the phyllosilicate clays encounter shear stress (*e.g*., bends or narrow spaces within a wellbore), they are capable of acting to reduce the viscosity of the fluids in which they are suspended. Under shear, the phyllosilicate clay structure is disrupted and energy is absorbed and redistributed. Additionally, phyllosilicates are tolerant of high pressures and temperatures and resist degradation in such conditions, which are often encountered in subterranean operations.

In some embodiments, the present invention provides a method of treating a subterranean formation comprising placing a treatment fluid comprising a base fluid and a friction reducing clay into the subterranean formation. While the methods of the present invention may preferably be used in stimulation operations, such as hydraulic fracturing operations, the methods may also be used in any well operation, including, but not limited to, drilling operations, lost circulation operations, sand control operations, completion operations, acidizing operations, scale inhibiting operations, water-blocking operations, frac-pack operations, wellbore strengthening operations, and sag control operations.

Any base fluid suitable for use in a stimulation or well operation may be used in the treatment fluids of the present invention. Suitable base fluids for use in conjunction with the present invention may include, but are not limited to, oil-based fluids; aqueous-based fluids; aqueous-miscible fluids; water-in-oil emulsions; and oil-in-water emulsions. Suitable oil-based fluids may include alkanes; olefins; aromatic organic compounds; cyclic alkanes; paraffins; diesel fluids; mineral oils; desulfurized hydrogenated kerosenes; and any combination thereof. Suitable aqueous-based fluids may include fresh water; saltwater (*e.g*., water containing one or more salts dissolved therein); brine (*e.g*., saturated salt water), seawater; and any combination thereof. Generally, the water may be from any source (*e.g*., produced aqueous fluids), provided that it does not contain components that might adversely affect the stability and/or performance of the treatment fluids of the present invention. Suitable aqueous-miscible fluids may include, but are not limited to, alcohols; (*e.g*., methanol, ethanol, n-propanol, isopropanol, n-butanol, sec-butanol, isobutanol, and t-butanol); glycerins; glycols (*e.g*., polyglycols, propylene glycol, and ethylene glycol); polyglycol amines; polyols; any derivative thereof; any in combination with salts (*e.g.*, sodium chloride, calcium chloride, calcium bromide, zinc bromide, potassium carbonate, sodium formate, potassium formate, cesium formate, sodium acetate, potassium acetate, calcium acetate, ammonium acetate, ammonium chloride, ammonium bromide, sodium nitrate, potassium nitrate, ammonium nitrate, ammonium sulfate, calcium nitrate, sodium carbonate, and potassium carbonate); any in combination with an aqueous-based fluid; and any combination thereof. Suitable water-in-oil emulsions, also known as invert emulsions, may have an oil-to-water ratio from a lower limit of greater than about 50:50, 55:45, 60:40, 65:35, 70:30, 75:25, or 80:20 to an upper limit of less than about 100:0, 95:5, 90:10, 85:15, 80:20, 75:25, 70:30, or 65:35 by volume in the base fluid, where the amount may range from any lower limit to any upper limit and encompass any subset therebetween.

The base fluids for use in the treatment fluids of the present invention may additionally be foamed or gelled. As used herein the term "foam" refers to a two-phase composition having a continuous liquid phase and a discontinuous gas phase. In some embodiments, treatment fluids for use in conjunction with the present invention may comprise a base fluid, a gas, and a foaming agent.

Suitable gases for use in conjunction with the present invention may include, but are not limited to, nitrogen; carbon dioxide; air; methane; helium; argon; and any combinations thereof. One skilled in the art, with the benefit of this disclosure, will recognize the benefit of each gas. By way of nonlimiting example, carbon dioxide foams may have deeper well capability than nitrogen foams because carbon dioxide emulsions have greater density than nitrogen gas foams so that the surface pumping pressure required to reach a corresponding depth is lower with carbon dioxide than with nitrogen. Moreover, the higher density may impart greater particulate or proppant transport capability, in necessary, up to about 12 lb of proppant per gallon of fracture fluid.

In some embodiments, the quality of the foamed treatment fluid may range from a lower limit of about 5%, 10%, 25%, 40%, 50%, 60%, or 70% gas volume to an upper limit of about 95%, 90%, 80%, 75%, 60%, or 50% gas volume, and wherein the quality of the foamed treatment fluid may range from any lower limit to any upper limit and encompass any subset therebetween. Most preferably, the foamed treatment fluid may have a foam quality from about 85% to about 95%, or about 90% to about 95%.

Suitable foaming agents for use in conjunction with the present invention may include, but are not limited to, cationic foaming agents; anionic foaming agents; amphoteric foaming agents; nonionic foaming agents; and any combination thereof. Nonlimiting examples of suitable foaming agents may include, but are not limited to, surfactants like betaines; sulfated or sulfonated alkoxylates; alkyl quarternary amines; alkoxylated linear alcohols; alkyl sulfonates; alkyl aryl sulfonates; C10-C20 alkyldiphenyl ether sulfonates; polyethylene glycols; ethers of alkylated phenol; sodium dodecylsulfate; alpha olefin sulfonates (*e.g*., sodium dodecane sulfonate, trimethyl hexadecyl ammonium bromide, and the like); any derivatives thereof; or any combinations thereof. Foaming agents may be included in foamed treatment fluids at concentrations ranging typically from about 0.05% to about 2% of the liquid component by weight (*e.g*., from about 0.5 to about 20 gallons per 1000 gallons of liquid).

In some embodiments, the treatment fluids of the present invention may comprise a base fluid, a gelling agent, a crosslinking agent, and/or a gel breaker. The gelling agents suitable for use in the present invention may comprise any substance (*e.g*., a polymeric material) capable of increasing the viscosity of the treatment fluid. In certain embodiments, the gelling agent may comprise one or more polymers that have at least two molecules that are capable of forming a crosslink in a crosslinking reaction in the presence of a crosslinking agent, and/or polymers that have at least two molecules that are so crosslinked (*i.e*., a crosslinked gelling agent). The gelling agents may be naturally-occurring gelling agents, synthetic gelling agents, or a combination thereof. The gelling agents also may be cationic gelling agents, anionic gelling agents, or a combination thereof. Suitable gelling agents include, but are not limited to, polysaccharides; biopolymers; and/or derivatives thereof that contain one or more of these monosaccharide units: galactose; mannose; glucoside; glucose; xylose; arabinose; fructose; glucuronic acid; or pyranosyl sulfate. Examples of suitable polysaccharides include, but are not limited to, guar gums (*e.g*., hydroxyethyl guar, hydroxypropyl guar, carboxymethyl guar, carboxymethylhydroxyethyl guar, and carboxymethylhydroxypropyl guar ("CMHPG")); cellulose derivatives (*e.g*., hydroxyethyl cellulose, carboxyethylcellulose, carboxymethylcellulose, and carboxymethylhydroxyethylcellulose); xanthan; scleroglucan; succinoglycan; diutan; and any combinations thereof. In certain embodiments, the gelling agents comprise an organic carboxylated polymer, such as CMHPG.

Suitable synthetic polymers include, but are not limited to, 2,2'-azobis(2,4-dimethyl valeronitrile); 2,2'-azobis(2,4-dimethyl-4-methoxy valeronitrile) ; polymers and copolymers of acrylamide ethyltrimethyl ammonium chloride; acrylamide; acrylamido- and methacrylamido-alkyl trialkyl ammonium salts; acrylamidomethylpropane sulfonic acid; acrylamidopropyl trimethyl ammonium chloride; acrylic acid; dimethylaminoethyl methacrylamide; dimethylaminoethyl methacrylate; dimethylaminopropyl methacrylamide; dimethyldiallylammonium chloride; dimethylethyl acrylate; fumaramide; methacrylamide; methacrylamidopropyl trimethyl ammonium chloride; methacrylamidopropyldimethyl-n-dodecylammonium chloride; methacrylamidopropyldimethyl-n-octylammonium chloride; methacrylamidopropyltrimethylammonium chloride; methacryloylalkyl trialkyl ammonium salts; methacryloylethyl trimethyl ammonium chloride; methacrylylamidopropyldimethylcetylammonium chloride; N-(3-sulfopropyl)-N-methacrylamidopropyl-N,N-dimethyl ammonium betaine; N,N-dimethylacrylamide; N-methylacrylamide; nonylphenoxypoly(ethyleneoxy)ethylmethacrylate; partially hydrolyzed polyacrylamide; poly 2-amino-2-methyl propane sulfonic acid; polyvinyl alcohol; sodium 2-acrylamido-2-methylpropane sulfonate; quaternized dimethylaminoethylacrylate; quaternized dimethylaminoethylmethacrylate; any derivatives thereof; and any combinations thereof. In certain embodiments, the gelling agent comprises an acrylamide/2-(methacryloyloxy)ethyltrimethylammonium methyl sulfate copolymer. In certain embodiments, the gelling agent may comprise an acrylamide/2-(methacryloyloxy)ethyltrimethylammonium chloride copolymer. In certain embodiments, the gelling agent may comprise a derivatized cellulose that comprises cellulose grafted with an allyl or a vinyl monomer, such as those disclosed in U.S. Pat. Nos. 4,982,793; 5,067,565; and 5,122,549 the entire disclosures of which are incorporated herein by reference.

Additionally, polymers and copolymers that comprise one or more functional groups (*e.g*., hydroxyl, cis-hydroxyl, carboxylic acids, derivatives of carboxylic acids, sulfate, sulfonate, phosphate, phosphonate, amino, or amide groups) may be used as gelling agents.

The gelling agent may be present in the breakable gel fluids useful in the methods of the present invention in an amount sufficient to provide the desired viscosity. In some embodiments, the gelling agents (*i.e*., the polymeric material) may be present in an amount in the range of from about 0.01% to about 10% by weight of the treatment fluid.

In those embodiments of the present invention where it is desirable to crosslink the gelling agent, the breakable gel fluid may comprise one or more crosslinking agents. The crosslinking agents may comprise a borate ion, a metal ion, or similar component that is capable of crosslinking at least two molecules of the gelling agent. Examples of suitable crosslinking agents include, but are not limited to, borate ions; magnesium ions; zirconium IV ions; titanium IV ions; aluminum ions; antimony ions; chromium ions; iron ions; copper ions; magnesium ions; and zinc ions. These ions may be provided by providing any compound that is capable of producing one or more of these ions. Examples of such compounds include, but are not limited to, ferric chloride; boric acid; disodium octaborate tetrahydrate; sodium diborate; pentaborates; ulexite; colemanite; magnesium oxide; zirconium lactate; zirconium triethanol amine; zirconium lactate triethanolamine; zirconium carbonate; zirconium acetylacetonate; zirconium malate; zirconium citrate; zirconium diisopropylamine lactate; zirconium glycolate; zirconium triethanol amine glycolate; zirconium lactate glycolate; titanium lactate; titanium malate; titanium citrate; titanium ammonium lactate; titanium triethanolamine; titanium acetylacetonate; aluminum lactate; aluminum citrate; antimony compounds; chromium compounds; iron compounds; copper compounds; zinc compounds; and combinations thereof. In certain embodiments of the present invention, the crosslinking agent may be formulated to remain inactive until it is "activated" by, among other things, certain conditions in the fluid (*e.g*., pH, temperature, etc.) and/or interaction with some other substance. In some embodiments, the activation of the crosslinking agent may be delayed by encapsulation with a coating (*e.g*., a porous coating through which the crosslinking agent may diffuse slowly, or a degradable coating that degrades downhole) that delays the release of the crosslinking agent until a desired time or place. The choice of a particular crosslinking agent will be governed by several considerations that will be recognized by one skilled in the art, including but not limited to the the type of gelling agent included, the molecular weight of the gelling agent(s), the conditions in the subterranean formation being treated, the safety handling requirements, the pH of the treatment fluid, temperature, and/or the desired delay for the crosslinking agent to crosslink the gelling agent molecules.

When included, suitable crosslinking agents may be present in the breakable gel fluids useful in the methods of the present invention in an amount sufficient to provide the desired degree of crosslinking between molecules of the gelling agent. In certain embodiments, the crosslinking agent may be present in the breakable gel fluids of the present invention in an amount in the range of from about 0.005% to about 1% by weight of the treatment fluid. In certain embodiments, the crosslinking agent may be present in the breakable gel fluids of the present invention in an amount in the range of from about 0.05% to about 1% by weight of the treatment fluid. One of ordinary skill in the art, with the benefit of this disclosure, will recognize the appropriate amount of crosslinking agent to include in a breakable gel fluid of the present invention based on, among other things, the temperature conditions of a particular application, the type of gelling agents used, the molecular weight of the gelling agents, the desired degree of viscosification, and/or the pH of the breakable gel fluid.

The treatment fluids useful in the methods of the present invention also may include internal gel breakers such as enzyme, oxidizing, acid buffer, or delayed gel breakers. The gel breakers may cause the breakable gel fluids of the present invention to revert to thin fluids that can be produced back to the surface. In some embodiments, the gel breaker may be formulated to remain inactive until it is "activated" by, among other things, certain conditions in the fluid (*e.g*. pH, temperature, etc.) and/or interaction with some other substance. In some embodiments, the gel breaker may be delayed by encapsulation with a coating (*e.g*., a porous coatings through which the breaker may diffuse slowly, or a degradable coating that degrades downhole) that delays the release of the gel breaker. In other embodiments the gel breaker may be a degradable material (*e.g*., polylactic acid or polygylcolic acid) that releases an acid or alcohol in the present of an aqueous liquid. In certain embodiments, the gel breaker used may be present in the treatment fluids in an amount in the range of from about 0.0001% to about 200% by weight of the gelling agent. One of ordinary skill in the art, with the benefit of this disclosure, will recognize the type and amount of a gel breaker to include in the breakable gel fluids of the present invention based on, among other factors, the desired amount of delay time before the gel breaks, the type of gelling agents used, the temperature conditions of a particular application, the desired rate and degree of viscosity reduction, and/or the pH of the treatment fluid.

The base fluids for use in the treatment fluids of the present invention may additionally comprise an additive selected from the group consisting of a salt; a weighting agent; an inert solid; a fluid loss control agent; an emulsifier; a dispersion aid; a corrosion inhibitor; an emulsion thinner; an emulsion thickener; a viscosifying agent; a surfactant; a particulate; a proppant; a lost circulation material; a pH control additive; a breaker; a biocide; a stabilizer; a chelating agent; a scale inhibitor; a gas hydrate inhibitor; a mutual solvent; an oxidizer; a reducer; a clay stabilizing agent; and any combination thereof.

In some embodiments, the present invention provides for a method comprising treating a subterranean formation with a friction reducing clay selected from the group consisting of phyllosilicate clay selected from the group consisting of a phyllosilicate smectite group clay; a phyllosilicate serpentine group clay; a phyllosilicate pyrophyllite-talc group clay; a phyllosilicate mica group clay; a phyllosilicate chlorite group clay; and any combinations thereof. The phyllosilicate clays of the present invention often contain large percentages of water trapped in their silicate sheets, allowing ease of cation substation. Phyllosilicate clays typically are doubly charged, having both negative and positive surface charges that are often balanced by external ion absorption. The structure, chemical composition, and ion exchange capacity of the phyllosilicate clays results in a large chemically active surface area having a high cation or anion exchange and hydration capacity, allowing modification of the flow behavior of liquids (*e.g*., as a friction reducing clay). The friction reducing clay may be present in the treatment fluids of the present invention in an amount from about 0.01% to about 20% by weight of the treatment fluid. In preferred embodiments, the friction reducing clay may be present in the treatment fluids of the present invention in an about from about 0.2% to about 5% by weight of the treatment fluid.

Suitable phyllosilicate smectite group clays for use in the present invention include, but are not limited to, an aliettite; a beidellite; a ferrosaponite; a hectorite; a nontronite; a pimelite; a saliotite; a saponite; a sauconite; a stevensite; a swinefordite; a volkonskoite; a yakhontovite; a zincsilite; and any combinations thereof. The phyllosilicate serpentine group clays for use in the methods of the present invention may include, but are not limited to, an amesite; an antigorite; a berthierine; a brindleyite; a caryopilite; a chrysotile; a clinochrysotile; a cronstedtite; a dickite; a fraipontite; a greenalite; a halloysite; a kaolinite; a kellyite; a lizardite; a manandonite; a nacrite; a nepouite; an odinite; an orthochrysotile; a parachrysotile; a pecoraite; and any combinations thereof. Suitable phyllosilicate pyrophyllite-talc group clay include, but are not limited to, a ferripyropyllite; a minnesotaite; a pyrophyllite; a talc; a willemseite; and any combinations thereof. Suitable phyllosilicate mica group clays for use in the present invention include, but are not limited to, aluminoceladonite; an anadite; an aspidolite; a biotite; a bityite; a boromuscovite; a celadonite; a chernykhite; a chromceladonite; a clintonite; an ephesite; a ferro-aluminoceladonite; a ferroceladonite; a ferrokinoshitalite; a ganterite; a glauconite; a hendricksite; an illite; a kinoshitalite; a lepidolite; a luanshiweiite; a margarite; a masutomilite; a montdorite; a muscovite; a nanpingite; a norrishite; an oxykinoshitalite; an oxyphlogopite; a phengite; a phlogopite; a polylithionite; a preiswerkite; a roscoelite; a shirokshinite; a siderophyllite; a sokolovaite; a suhailite; a tainiolite; a tetraferriphlogopite; a tovelite; a trilithionite; a voloshinite; a yangzhumingite; a zinnwaldite; and any combinations thereof. The phyllosilicate chlorite group clay that may be included in the treatment fluids of the present invention include, but are not limited to, a baileychlore; a borocookeite; a chamosite; a clinochlore; a cookeite; a corundophilite; a donbassite; a franklinfurnaceite; a nimite; an orthochamosite; a pennantite; a sudoite; and any combinations thereof.

In some embodiments of the present invention, a traditional friction reducing polymer may be included in the treatment fluids of the present invention and synergistically interact with the friction reducing clay. The double charged nature of the friction reducing clays may allow both cationic and anionic friction reducing polymers to interact in a synergistic manner so as to form complex chemical structures between the silicate sheets and the long-chain polymers in order to enhance the low shear viscosity of the treatment fluids of the present invention. The long-chain friction reducing polymers may form an interpenetrating polymer network ("IPN network") with the silicate sheets of the friction reducing clays such that the polymers are at least partially interlaced in the silicate sheets of the clays without being covalently bonded together, thereby forming a structure that exhibits the beneficial characteristics of both the clay and the polymer. The IPN network acts to protect against the depolymerization that often reduces the effectiveness of traditional friction reducing polymers. Thus, the synergistic interaction may improve the friction reducing function that either the friction reducing polymer or the friction reducing clay could achieve alone. The friction reducing polymers of the present invention may be present in an amount from about 0.01% to about 20% by weight of the treatment fluids. In preferred embodiments, the friction reducing polymers of the present invention may be present in an about from about 0.01% to about 10% by weight of the present invention. In still preferred embodiments, the combined friction reducing polymer and friction reducing clay in a treatment fluid is present in an amount from about 0.01% to about 5% by weight of the treatment fluid.

Friction reducing polymers suitable for use in the present invention may be polymers and/or copolymers. The term "copolymer," as used herein, is not limited to polymers comprising two types of monomeric units, but includes any combination of monomeric units, *e.g*., terpolymers, tetrapolymers, and the like. Suitable friction reducing polymers for use in the treatment fluids of the present invention include, but are not limited to, a cationic polyelectrolyte; an anionic polyelectrolyte; an acrylamide-containing polymer; an acrylate-containing polymer; a polysaccharide; copolymers thereof; any derivatives thereof; and any combinations thereof. An example of a suitable friction reducing polymer comprises a quaternized aminoalkyl acrylate, such as a copolymer of acrylamide and dimethylaminoethyl acrylate quaternized with benzyl chloride. Another example of a suitable friction reducing polymer comprises acrylamide. An example of a suitable friction reducing polymer comprising acrylamide is a copolymer of acrylamide and acrylic acid. Such friction reducing polymers may further comprise additional monomers, such as 2-acrylamido-2-methylpropanesulfonic acid, N,N-dimethyl acrylamide, vinylsulfonic acid, N-vinyl acetamide, N-vinyl formamide, and mixtures thereof. The polysaccharide friction reducing polymer may include, but is not limited to, monomers of galactose; mannose; glucoside; glucose; xylose, arabinose; fructose; glucuronic acid; pyranosyl sulfate; and any combinations thereof. Other examples of suitable friction reducing polymers are described in U.S. Pat. Nos. 6,784,141, 7,004,254, 7,232,793, and 7,271,134 and U.S. Patent Application Publication No. 2008/0045422, the entire disclosures of which are incorporated herein by reference. Combinations and derivatives of suitable friction reducing polymers may also be suitable for use.

The friction reducing polymers should have a molecular weight sufficient to provide a desired level of friction reduction. Generally, friction reducing polymers having higher molecular weights may be needed to provide a desirable level of friction reduction. For example, in some embodiments, the average molecular weight of the friction reducing polymers may be in the range of from about 1,000,000 to about 20,000,000 Da, as determined using intrinsic viscosities. Those of ordinary skill in the art will recognize that friction reducing polymers having molecular weights outside the listed range may still provide some degree of friction reduction in an aqueous treatment fluid.

The friction reducing polymers may be provided in any suitable form, including in a solid form, as an oil-external emulsion polymer, or as a component of an aqueous solution. In embodiments where a particular friction reducing polymer is provided as an oil-external emulsion polymer, the oil-external emulsion polymer may comprise water, a water-immiscible liquid, an emulsifying surfactant, and a friction reducing polymer. Suitable oil-external emulsion polymer further may comprise inhibitors, salts, and inverters. As those of ordinary skill in the art will appreciate, with the benefit of this disclosure, upon addition to the aqueous treatment fluid, the emulsion should invert, releasing the friction reducing polymer into the aqueous treatment fluid.

Therefore, the present invention is well adapted to attain the ends and advantages mentioned as well as those that are inherent therein. The particular embodiments disclosed above are illustrative only, as the present invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular illustrative embodiments disclosed above may be altered, combined, or modified and all such variations are considered within the scope and spirit of the present invention. The invention illustratively disclosed herein suitably may be practiced in the absence of any element that is not specifically disclosed herein and/or any optional element disclosed herein. While compositions and methods are described in terms of "comprising," "containing," or "including" various components or steps, the compositions and methods can also "consist essentially of" or "consist of" the various components and steps. All numbers and ranges disclosed above may vary by some amount. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the element that it introduces. If there is any conflict in the usages of a word or term in this specification and one or more patent or other documents that may be incorporated herein by reference, the definitions that are consistent with this specification should be adopted.

## Claims

1. A method of treating a subterranean formation comprising:
providing a treatment fluid comprising an aqueous base fluid and a friction reducing clay;
wherein the friction reducing clay is a phyllosilicate clay selected from the group consisting of a phyllosilicate smectite group clay; a phyllosilicate serpentine group clay; a phyllosilicate pyrophyllite-talc group clay; a phyllosilicate mica group clay; a phyllosilicate chlorite group clay; and any combination thereof; and
placing the treatment fluid into the subterranean formation.

2. The method of claim 1, wherein the friction reducing clay is present in an amount of about 0.01% to about 20% by weight of the treatment fluid.

3. The method of claim 1 or claim 2, wherein the phyllosilicate smectite group clay is selected from the group consisting of an aliettite; a beidellite; a ferrosaponite; a hectorite; a nontronite; a pimelite; a saliotite; a saponite; a sauconite; a stevensite; a swinefordite; a volkonskoite; a yakhontovite; a zincsilite; and any combination thereof.

4. The method of any preceding claim, wherein the phyllosilicate serpentine group clay is selected from the group consisting of an amesite; an antigorite; a berthierine; a brindleyite; a caryopilite; a chrysotile; a clinochrysotile; a cronstedtite; a dickite; a fraipontite; a greenalite; a halloysite; a kellyite; a lizardite; a manandonite; a nacrite; a nepouite; an odinite; an orthochrysotile; a parachrysotile; a pecoraite; and any combination thereof.

5. The method of any preceding claim, wherein the phyllosilicate pyrophyllite-talc group clay is selected from the group consisting of a ferripyropyllite; a minnesotaite; a pyrophyllite; a talc; a willemseite; and any combination thereof.

6. The method of any preceding claim, wherein the phyllosilicate mica group clay is selected from the group consisting of an aluminoceladonite; an anadite; an aspidolite; a biotite; a bityite; a boromuscovite; a celadonite; a chernykhite; a chromceladonite; a clintonite; an ephesite; a ferro-aluminoceladonite; a ferroceladonite; a ferrokinoshitalite; a ganterite; a glauconite; a hendricksite; an illite; a kinoshitalite; a lepidolite; a luanshiweiite; a margarite; a masutomilite; a montdorite; a muscovite; a nanpingite; a norrishite; an oxykinoshitalite; an oxyphlogopite; a phengite; a phlogopite; a polylithionite; a preiswerkite; a roscoelite; a shirokshinite; a siderophyllite; a sokolovaite; a suhailite; a tainiolite; a tetraferriphlogopite; a tovelite; a trilithionite; a voloshinite; a yangzhumingite; a zinnwaldite; and any combination thereof.

7. The method of any preceding claim, wherein the phyllosilicate chlorite group clay is selected from the group consisting of a baileychlore; a borocookeite; a chamosite; a clinochlore; a cookeite; a corundophilite; a donbassite; a franklinfurnaceite; a nimite; an orthochamosite; a pennantite; a sudoite; and any combination thereof.

8. The method of any preceding claim, wherein the treatment fluid further comprises a friction reducing polymer.

9. The method of claim 8, wherein the friction reducing polymer is present in an amount of about 0.01% to about 20% by weight of the treatment fluid.

10. The method of claim 8 or claim 9, wherein the friction reducing polymer is selected from the group consisting of a cationic polyelectrolyte; an anionic polyelectrolyte; an acrylamide-containing polymer; an acrylate-containing polymer; a polysaccharide; copolymers thereof; any derivative thereof; and any combination thereof.

11. The method of claim 10, wherein the polysaccharide contains at least one monosaccharide monomer selected from the group consisting of galactose; mannose; glucoside; glucose; xylose, arabinose; fructose; glucuronic acid; pyranosyl sulfate; and any combination thereof.

12. The method of any preceding claim, wherein the treatment fluid further comprises an additive selected from the group consisting of a salt; a weighting agent; an inert solid; a fluid loss control agent; an emulsifier; a dispersion aid; a corrosion inhibitor; an emulsion thinner; an emulsion thickener; a viscosifying agent; a surfactant; a particulate; a proppant; a lost circulation material; a pH control additive; a breaker; a biocide; a stabilizer; a chelating agent; a scale inhibitor; a gas hydrate inhibitor; a mutual solvent; an oxidizer; a reducer; a clay stabilizing agent; and any combination thereof.

## Amended claims

### Amended claims in accordance with Rule 137(2) EPC.

**1.** A method of treating a subterranean formation comprising:
providing a treatment fluid comprising an aqueous base fluid, a friction-reducing clay and friction-reducing polymer; and
placing the treatment fluid into the subterranean formation;
wherein the friction-reducing clay is a phyllosilicate clay selected from the group consisting of a phyllosilicate smectite group clay, a phyllosilicate serpentine group clay, a phyllosilicate pyrophyllite-talc group clay, a phyllosilicate mica group clay, a phyllosilicate chlorite group clay, and any combination thereof; and
wherein the friction-reducing polymer is selected from the group consisting of a cationic polyelectrolyte, an anionic polyelectrolyte, an acrylamide-containing polymer, an acrylate-containing polymer, a polysaccharide, copolymers thereof, any derivative thereof, and any combination thereof.

**2.** The method of claim 1, wherein the friction reducing clay is present in an amount of 0.01% to 20% by weight of the treatment fluid.

**3.** The method of claim 1 or claim 2, wherein the phyllosilicate smectite group clay is selected from the group consisting of an aliettite, a beidellite, a ferrosaponite, a hectorite, a nontronite, a pimelite, a saliotite, a saponite, a sauconite, a stevensite, a swinefordite, a volkonskoite, a yakhontovite, a zincsilite, and any combination thereof.

**4.** The method of any preceding claim, wherein the phyllosilicate serpentine group clay is selected from the group consisting of an amesite, an antigorite, a berthierine, a brindleyite, a caryopilite, a chrysotile, a clinochrysotile, a cronstedtite, a dickite, a fraipontite, a greenalite, a halloysite, a kellyite, a lizardite, a manandonite, a nacrite, a nepouite, an odinite, an orthochrysotile, a parachrysotile, a pecoraite, and any combination thereof.

**5.** The method of any preceding claim, wherein the phyllosilicate pyrophyllite-talc group clay is selected from the group consisting of a ferripyropyllite, a minnesotaite, a pyrophyllite, a talc, a willemseite, and any combination thereof.

**6.** The method of any preceding claim, wherein the phyllosilicate mica group clay is selected from the group consisting of an aluminoceladonite, an anadite, an aspidolite, a biotite, a bityite, a boromuscovite, a celadonite, a chernykhite, a chromceladonite, a clintonite, an ephesite, a ferro-aluminoceladonite, a ferroceladonite, a ferrokinoshitalite, a ganterite, a glauconite, a hendricksite, an illite, a kinoshitalite, a lepidolite, a luanshiweiite, a margarite, a masutomilite, a montdorite, a muscovite, a nanpingite, a norrishite, an oxykinoshitalite, an oxyphlogopite, a phengite, a phlogopite, a polylithionite, a preiswerkite, a roscoelite, a shirokshinite, a siderophyllite, a sokolovaite, a suhailite, a tainiolite, a tetraferriphlogopite, a tovelite, a trilithionite, a voloshinite, a yangzhumingite, a zinnwaldite, and any combination thereof.

**7.** The method of any preceding claim, wherein the phyllosilicate chlorite group clay is selected from the group consisting of a baileychlore, a borocookeite, a chamosite, a clinochlore, a cookeite, a corundophilite, a donbassite, a franklinfurnaceite, a nimite, an orthochamosite, a pennantite, a sudoite, and any combination thereof.

**8.** The method of any preceding claim, wherein the friction reducing polymer is present in an amount of about 0.01% to about 20% by weight of the treatment fluid.

**9.** The method of any preceding claim, wherein the polysaccharide is formed from at least one monosaccharide monomer selected from the group consisting of galactose, mannose, glucoside, glucose, xylose, arabinose, fructose, glucuronic acid, and pyranosyl sulfate.

**10.** The method of any preceding claim, wherein the treatment fluid further comprises an additive selected from the group consisting of a salt, a weighting agent, an inert solid, a fluid loss control agent, an emulsifier, a dispersion aid, a corrosion inhibitor, an emulsion thinner, an emulsion thickener, a viscosifying agent, a surfactant, a particulate, a proppant, a lost circulation material, a pH control additive, a breaker, a biocide, a stabilizer, a chelating agent, a scale inhibitor, a gas hydrate inhibitor, a mutual solvent, an oxidizer, a reducer, a clay stabilizing agent, and any combination thereof.
